# EUROPÄISCHE PATENTSCHRIFT

(11) **EP 0 711 946 B1**
(45) Veröffentlichungstag und Bekanntmachung des Hinweises auf die Patenterteilung: **14.04.1999**
(21) Anmeldenummer: 95114863.4
(22) Anmeldetag: 21.09.1995
(51) Int. Cl.: F16L 39/00, F16L 37/092, F16L 37/40

(54) **Steckkupplung für Leitungen**
Plug coupling for pipes
Accouplement enfichable pour tuyaux

(30) Priorität: 12.11.1994 DE 9418176 U
(43) Veröffentlichungstag der Anmeldung: 15.05.1996
(73) Patentinhaber: FESTO AG & Co, 73734 Esslingen (DE)
(72) Erfinder: Stoll, Kurt, Dr., D-73732 Esslingen (DE)
(74) Vertreter: Abel, Martin, Dipl.-Ing.

(56) Entgegenhaltungen:
- EP-A- 0 006 239
- FR-A- 864 149
- FR-A- 2 281 537
- US-A- 2 820 651
- US-A- 3 092 140

## Beschreibung

Die Erfindung betrifft eine Anordnung enthaltend eine Steckkupplung und daran anschließbare, einen Fluidkanal enthaltende Leitungen wie Rohre oder Schläuche, wobei die Steckkupplung über ein Kupplungsgehäuse verfügt, das mindestens eine Eingangsöffnung und zwei Ausgangsöffnungen aufweist, die an zwei einander entgegengesetzten Gehäuseseiten angeordnet sind, wobei sowohl der mindestens einen Eingangsöffnung als auch den Ausgangsöffnungen eine am Kupplungsgehäuse angeordnete Verbindungseinrichtung zum lösbaren Anschließen einer der Leitungen zugeordnet ist, und wobei jede Ausgangsöffnung über einen in dem Kupplungsgehäuse ausgebildeten Durchgangskanal mit einer Eingangsöffnung in Verbindung steht und jeder Ausgangsöffnung eine eigene, im zugeordneten Durchgangskanal vorgesehene Absperreinrichtung zugeordnet ist, die ein in eine Schließstellung vorgespanntes und durch mechanische Beaufschlagung in eine Offenstellung bewegbares Absperrorgan aufweist.

Eine Anordnung dieser Art geht aus der EP-A-0 006 239 hervor. Diese verfügt über eine Steckkupplung mit einem mehrteiligen Kupplungsgehäuse, wobei am einen Gehäuseteil mehrere Eingangsöffnungen und am anderen Gehäuseteil mehrere Ausgangsöffnungen vorgesehen sind. Jede der Öffnungen ist mit einer Schraubverbindungseinrichtung ausgestattet, an denen weiterführende Leitungen anschraubbar sind. Die beiden Gehäuseteile können lösbar zusammengesteckt werden, um Durchgangskanäle zu erhalten, die die Eingangs- und Ausgangsöffnungen paarweise miteinander verbinden. In jeden Durchgangskanal ist innerhalb des einen Gehäuseteils eine Absperreinrichtung eingeschaltet, die bei zusammengesteckten Gehäuseteilen den zugeordneten Durchgangskanal freigibt, wenn am anderen Gehäuseteil zuvor ein Auslösestift fixiert worden ist, der das Absperrorgan der Absperreinrichtung durch mechanische Beaufschlagung in eine Offenstellung bewegt.

Infolge der als Schraubgewinde ausgebildeten ein- und ausgangsseitigen Verbindungseinrichtungen ist die Handhabung der bekannten Steckkupplung in manchen Fällen etwas ungünstig. Das Herstellen einer Verbindung zwischen mehreren Leitungen ist mit dieser Steckkupplung relativ umständlich, zumal auch Werkzeuge benötigt werden. Speziell wenn eine Mehrzahl von Leitungen miteinander gekuppelt werden müssen, wie es beispielsweise beim Anschluß von Leitungen der Fall ist, die zu einem Arbeitszylinder führen, ist der Montageaufwand beträchtlich. Zwar ist es möglich gleichzeitig zwei zu einem Verbraucher führende Leitungen anzuschließen, doch können diese Leitungen stets nur gleichzeitig an- und abgekuppelt werden, indem die Gehäuseteile des Kupplungsgehäuses zusammengesteckt oder voneinander gelöst werden.

Es ist die Aufgabe der vorliegenden Erfindung, eine Anordnung der eingangs genannten Art zu schaffen, die ein voneinander unabhängiges lösbares Verbinden einer Steckkupplung und mehrerer Leitungen auf einfache Weise ermöglicht.

Zur Lösung dieser Aufgabe ist erfindungsgemäß vorgesehen, daß die Verbindungseinrichtung sowohl einer jeweiligen Eingangsöffnung als auch einer jeweiligen Ausgangsöffnung als Steckverbindungseinrichtung ausgebildet ist, die eine ringförmige Spannzange mit radial beweglichen Klemmarmen aufweist, die so ausgebildet sind, daß sie eine eingesteckte Leitung am Außenumfang federelastisch nachgiebig beaufschlagen, und daß die Absperrorgane derart im zugeordneten Durchgangskanal angeordnet sind, daß sie von der Stirnfläche der in die Steckverbindungseinrichtung der zugeordneten Ausgangsöffnung eingesteckten Leitung beaufschlagt und dadurch aus der bei unbelegter Ausgangsöffnung eingenommenen Schließstellung in die Offenstellung verlagert sind.

Somit sind sämtliche Verbindungseinrichtungen der Steckkupplung als Steckverbindungseinrichtungen ausgebildet, was zur Folge hat, daß sich die Steckkupplung zur problemlosen lösbaren Verbindung von Leitungen eignet, ohne auf Werkzeuge zurückgreifen zu müssen. Indem die jeder Ausgangsöffnung zugeordnete Absperreinrichtung unmittelbar durch die ausgangsseitig einsteckbare Leitung betätigt wird, lassen sich die ausgangsseitigen Leitungen unabhängig voneinander ankuppeln und lösen, wobei die betreffenden Absperrorgane einen Fluidaustritt verhindern, wenn eine der Ausgangsöffnungen nicht belegt ist.

Eine bevorzugte Ausgestaltung dieser Anordnung sieht vor, daß an dem Kupplungsgehäuse der Steckkupplung zwei Ausgangsöffnungen und eine Eingangsöffnung vorgesehen sind, denen jeweils eine Steckverbindungseinrichtung für Leitungen zugeordnet ist, wobei beide Durchgangskanäle mit der einzigen Eingangsöffnung kommunizieren.

Bei einer hierzu alternativen Bauform sind an dem Kupplungsgehäuse an der einen Gehäuseseite zwei Ausgangsöffnungen und an der anderen, entgegengesetzten Gehäuseseite ebenfalls zwei Eingangsöffnungen vorgesehen, denen jeweils eine Steckverbindungseinrichtung für Leitungen zugeordnet ist, wobei zwei voneinander getrennte Durchgangskanäle vorhanden sind, die jeweils eine der Ausgangsöffnungen mit einer der Eingangsöffnungen verbinden.

Das Kupplungsgehäuse ist insgesamt zweckmäßigerweise blockähnlich gestaltet, was die Herstellung und die spätere Handhabung vereinfacht. Die Befestigung an einer beliebigen Halterung ist problemlos möglich, wobei zweckmäßigerweise zur Befestigung mindestens eine das Kupplungsgehäuse quer durchsetzende Queröffnung vorhanden ist, die das Hindurchführen einer Befestigungsschraube ermöglicht.

Zum Lösen der Steckverbindung wird zweckmäßigerweise ein Lösering betätigt, der ein Nach-außen-Schwenken der Klemmarme bewirkt, so daß die eingesteckte Leitung ohne Beschädigungsgefahr entnommen werden kann. Für die Steckverbindungseinrichtungen bietet sich ein Aufbau an, wie er z. B. aus der DE 40 39 066 C1 hervorgeht.

Nachfolgend wird die Erfindung anhand der beiliegenden Zeichnung näher erläutert. In dieser zeigen:
- Fig. 1: eine erste Bauform der erfindungsgemäßen Steckkupplung in perspektivischer Darstellung im an einer Halterung montierten Zustand,
- Fig. 2: die Steckkupplung aus Fig. 1 im Längsschnitt gemäß Schnittlinie II-II und
- Fig. 3: eine weitere Bauform der Steckkupplung in Seitenansicht, wobei der Verlauf der Durchgangskanäle und die Anordnung der Absperreinrichtungen schematisch angedeutet ist.

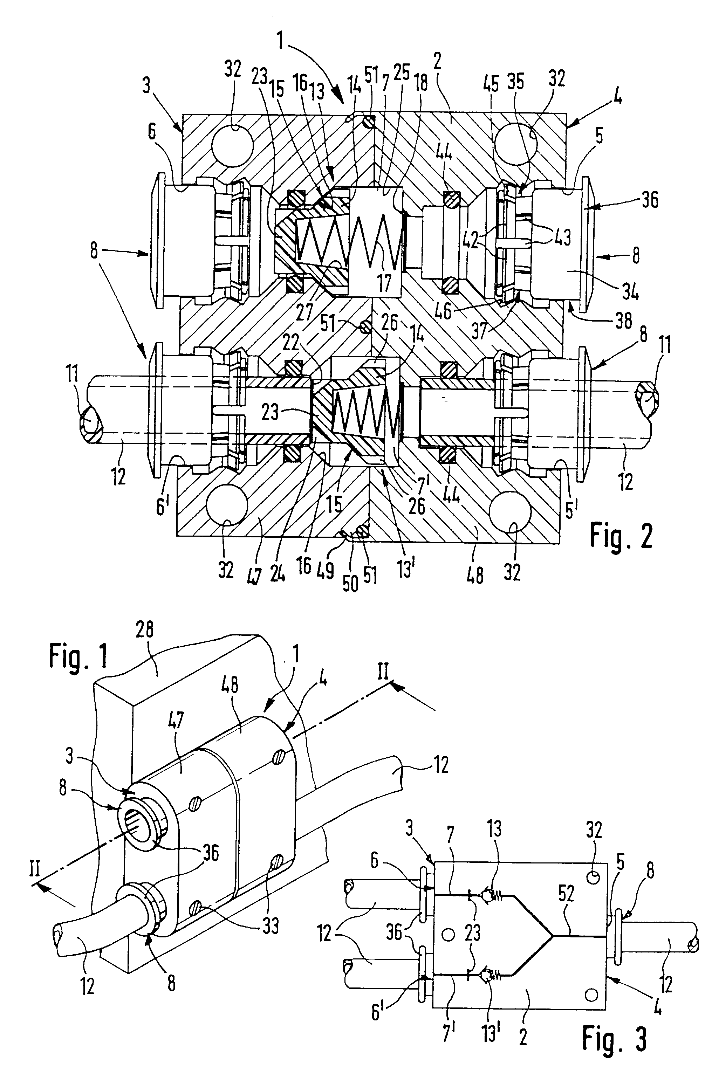

Die in Fig. 1 und 2 abgebildete Steckkupplung 1 verfügt über ein im wesentlichen blockähnliches Kupplungsgehäuse 2 mit zwei zueinander parallel verlaufenden Außenflächen an der Vorderseite 3 und an der Rückseite 4. Der Außenumfang zwischen der Vorderseite 3 und der Rückseite 4 ist, im Querschnitt gesehen, im wesentlichen rechteckförmig konturiert, wobei die Eckenbereiche abgerundet sind. Auf diese Weise ergibt sich ein kompaktes, unzerklüftetes Gehäuse, an dem sich wenig Schmutz absetzt und das relativ einfach hergestellt werden kann.

An der Rückseite 4 des Kupplungsgehäuses 2 sind zueinander beabstandet zwei Eingangsöffnungen 5, 5' ausgebildet. An der Vorderseite 3 befinden sich zwei ebenfalls nebeneinanderliegend angeordnete Ausgangsöffnungen 6, 6'. Diese Eingangs- und Ausgangsöffnungen 5, 5'; 6, 6' sind über jeweils einen Durchgangskanal 7, 7' paarweise miteinander verbunden. Somit kommuniziert die erste Eingangsöffnung 5 über den ersten Durchgangskanal 7 mit der ersten Ausgangsöffnung 6, und die zweite Eingangsöffnung 5' kommuniziert über den zweiten Durchgangskanal 7' mit der zweiten Ausgangsöffnung 6'.

Die beiden Durchgangskanäle 7, 7' haben beim Ausführungsbeispiel einen geradlinigen Verlauf und sind parallel zueinander angeordnet. Betrachtet man den rechteckähnlichen Querschnitt des Kupplungsgehäuses 2, so befinden sich die Durchgangskanäle und ihre Öffnungen in der Ebene der längeren Querschnittsausdehnung nebeneinanderliegend. Auf diese Weise läßt sich ein relativ schmales, nur geringe Breite aufweisendes Kupplungsgehäuse 2 verwirklichen.

Jeder der erwähnten vier Uffnungen 5, 5'; 6, 6' ist eine Steckverbindungseinrichtung 8 zum lösbaren Anschließen von Leitungen 12 zugeordnet. Auf diese Weise lassen sich Fluidleitungen miteinander verbinden, ohne Werkzeuge einsetzen zu müssen. Es genügt, eine jeweilige Leitung 12 in die ausgewählte Steckverbindungseinrichtung 8 einzustecken, um automatisch ein sicheres Fixieren der betreffenden Leitung zu erzielen. Zum Entnehmen einer Leitung 12 wird die zugeordnete Steckverbindungseinrichtung 8 kurz manuell betätigt, so daß die Leitung freigegeben ist und beschädigungsfrei herausgezogen werden kann. Die anzuschließenden Leitungen 12 enthalten jeweils mindestens einen Fluidkanal 11 und können daher auch als "Kanalbauteile" bezeichnet werden.

Im Verlauf eines jeden Durchgangskanales 7, 7' ist eine Absperreinrichtung 13, 13' angeordnet. Sie ist vollständig im zugeordneten Durchgangskanal 7, 7' aufgenommen. Funktionell ist sie der jeweiligen Ausgangsöffnung 6, 6' zugeordnet, sie läßt sich durch die in die jeweilige Ausgangsöffnung 6, 6' eingesteckte Leitung 12 betätigen.

Üblicherweise wird die Steckkupplung 1 derart eingesetzt, daß an den Eingangsöffnungen 5, 5' Leitungen 12 angekuppelt werden, die mit einer nicht näher dargestellten Druckmittelquelle verbunden sind und unter Druck stehendes Fluid heranführen. Bei diesem Fluid handelt es sich insbesondere um Druckluft. An den Ausgangsöffnungen 6, 6' werden Leitungen angeschlossen, die zu beliebigen Verbrauchern führen, welche mit Druckmittel versorgt werden sollen, das die an den Eingangsöffnungen 5, 5' angeschlossenen Leitungen 12 liefern. Beispielsweise können an die ausgangsseitigen Leitungen 12 Arbeitszylinder angeschlossen werden.

Die Absperreinrichtungen 13, 13' verhindern einen unkontrollierten Austritt von Druckmittel über die Ausgangsöffnungen 6, 6', wenn an den Eingangsöffnungen 5, 5' unter Druck stehende Leitungen 12 angeschlossen sind, die Ausgangsöffnungen 6, 6' jedoch noch unbelegt sind. Zu diesem Zweck verfügt eine jeweilige Absperreinrichtung 13, 13' über ein in Längsrichtung des betreffenden Durchgangskanales 7, 7' bewegliches Absperrorgan 14, das zwischen einer in der oberen Hälfte der Fig. 2 eingenommenen Schließstellung und einer in der unteren Hälfte der Fig. 2 eingenommenen Offenstellung umschaltbar ist.

Das Absperrorgan 14 verfügt beim Ausführungsbeispiel über eine kegelige Absperfläche 15, der eine komplementär konturierte gehäuseseitige Dichtfläche 16 gegenüberliegt.

Eine im betreffenden Durchgangskanal 7, 7' angeordnete Rückstellfeder 17 stützt sich einerseits am Gehäuse (Abstützstelle 18) und andererseits an dem Absperrorgan 14 ab und spannt letzteres in die Schließstellung vor, in der seine Absperrfläche 15 dichtend an der gehäusefesten Dichtfläche 16 anliegt. Auf diese Weise ist in der Schließstellung ein Fluiddurchgang von der Eingangsöffnung 5, 5' zur zugeordneten Ausgangsöffnung 6, 6' unterbunden. Da die Schließrichtung des Absperrorganes 14 zur zugeordneten Ausgangsöffnung 6, 6' weist, können die Absperreinrichtungen 13, 13' von dem eingangsseitig anstehenden Druck nicht geöffnet werden. Dieser eingangsseitige Druck verstärkt vielmehr die auf das Absperrorgang 14 wirkende Schließkraft, so daß ein ungewollter Fluidaustritt mit Sicherheit ausgeschlossen ist.

Die Absperreinrichtungen 13, 13' lassen sich mechanisch entsperren, indem das Absperrorgan 14 entgegen der von der Feder 17 und dem anstehenden Druckmittel ausgeübten Schließkraft von der Dichtfläche 16 abgehoben wird. Hierzu wird das Absperrorgan 14 in Richtung der zugeordneten Eingangsöffnung 5, 5' verlagert. Die erforderliche Verstellkraft bzw. Umschaltkraft wird über diejenige Leitung 12 ausgeübt, die an die zugeordnete Ausgangsöffnung 6, 6' angeschlossen werden soll und zu diesem Zweck in die betreffende Ausgangsöffnung 6, 6' eingesteckt wird. Beim Einstecken wird das Absperrorgan 14 nach einem gewissen Einsteckweg von der Stirnfläche 22 der eingesteckten Leitung beaufschlagt und beim weiteren Einschieben dieser Leitung 12 in die abgebildete Offenstellung verlagert. Das Absperrorgan 14 kann einen der Ausgangsöffnung 6, 6' zugewandten Betätigungsvorsprung 23 aufweisen, der in der Schließstellung durch den von der Dichtfläche 16 umgebenen Kanalabschnitt hindurchragt. Mehrere, z. B. schlitzartige Überströmkanäle 24 an dem Betätigungsvorsprung 23 verhindern, daß der Betätigungsvorsprung 23 den Fluidkanal 11 der eingesteckten Leitung 12 versperrt.

Das Absperrorgan 14 ist in einem Führungsabschnitt 25 des zugeordneten Durchgangskanals 7, 7' axial beweglich geführt. Damit das Druckmittel in der Offenstellung an dem Absperrorgan 14 vorbei strömen kann, verfügt letzteres im Bereich des Außenumfanges ebenfalls über eine Mehrzahl von axial verlaufenden Überströmkanälen 26, die z. B. schlitzartig ausgebildet sind. Die Überströmkanäle 26 könnten auch am Gehäuse vorgesehen sein, jedenfalls erfolgt ihre Anordnung derart, daß sie auf der den Eingangsöffnungen 5, 5' zugewandten Seite der Dichtfläche 16 liegen.

Um eine kompakte Bauform zu erzielen, greift die beim Ausführungsbeispiel von einer Schraubendruckfeder gebildete Rückstellfeder 17 am Absperrorgan 14 in eine Ausnehmung 27 ein.

Indem nun sämtliche Öffnungen mit einer Steckverbindungseinrichtung 8 bestückt sind, lassen sich beliebige Leitungen problemlos mit einem einfachen Steckvorgang anschließen. Umständliche Verschraubungsarbeiten erübrigen sich. Bei den anzukuppelnden Leitungen 12 kann es sich um starre oder flexible Leitungen handeln, beispielsweise um Rohre aus Metall oder hartem Kunststoff oder um flexible Schläuche, beispielsweise Kunststoffschläuche aus PU-Material.

Um die Steckkupplung an einer geeigneten Halterung 28 festlegen zu können, verfügt das beispielsgemäße Kupplungsgehäuse 2 über eine Mehrzahl von Queröffnungen 32, die das Kupplungsgehäuse 2 quer zur Längsrichtung der Durchgangskanäle 7, 7' durchsetzen. Sie eignen sich zum Durchführen von Befestigungsmitteln wie Befestigungsschrauben 33, mit denen das Kupplungsgehäuse 2 an die Halterung 28 angeschraubt werden kann. Diese Halterung 28 kann beispielsweise vom Gehäuse eines Arbeitszylinders gebildet sein. Bei der Bauform der Fig. 1 und 2 sind vier Queröffnungen 32 vorgesehen, die in den Eckenbereichen des Kupplungsgehäuses 2 derart angeordnet sind, daß sie die Durchgangskanäle 7, 7' nicht schneiden.

Die vorhandenen vier Steckverbindungseinrichtungen 8 verfügen jeweils über ein insbesondere einstückiges und z. B. hülsenähnliches Ringelement 34, in dem in Baueinheit eine ringförmige Spannzange 35 und ein Lösering 36 zusammengefaßt sind. Das Ringelement 34 sitzt mit seinem vorderen Ringabschnitt 37 in der zugeordneten Öffnung 5, 5'; 6, 6' ein, wobei es mit seinem hinteren Ringabschnitt 38 aus der betreffenden Öffnung herausragt und somit über die Außenfläche des Gehäuses an der zugeordneten Vorder- und Rückseite 3, 4 vorsteht. Der vordere Ringabschnitt 37 bildet die Spannzange 35, über die das Ringelement 34 gleichzeitig formschlüssig in der betreffenden Öffnung 5, 5'; 6, 6' fixiert und gegen Herausziehen gesichert ist. An die Spannzange 35 schließt sich axial nach außen hin der Lösering 36 an, der den hinteren Ringabschnitt 38 bildet.

Die Spannzange 35 verfügt über eine Mehrzahl radial beweglicher Klemmarme 42, die an den Lösering 36 angeformt sind und ausgehend von diesem axial ins Innere des betreffenden Durchgangskanals 7, 7' hineinragen. Gleichzeitig verlaufen sie nach radial innen. Auf diese Weise umschließen die Klemmarme 42 mit ihrem freien Endbereich einen Querschnitt, der geringer ist als der Außenquerschnitt der anzuschließenden Leitungen 12.

Beim Einstecken einer Leitung 12 in eine der Öffnungen 5, 5'; 6, 6' wird die betreffende Leitung 12 durch das zugeordnete Ringelement 34 hindurchgeführt. Dabei gelangt die Leitung 12 in Kontakt mit den Endbereichen der Klemmarme 42, die somit nach radial außen gebogen werden und auf Grund ihrer federelastischen Aufhängung mit einer Klemmkraft auf den Außenumfang der Leitung 12 einwirken. Da die Klemmarme 42 über den Außenumfang der betreffenden Leitung 12 verteilt angeordnet sind und zwischen benachbarten Klemmarmen 42 insbesondere schlitzartige Unterbrechungen 43 vorliegen, ergibt sich ein guter Halt bei optimaler Beweglichkeit der Klemmarme 42 unabhängig voneinander.

Die Leitung 12 wird so weit durch das Ringelement 34 hindurchgesteckt, bis sie mit ihrem vorderen Endbereich einen Dichtring 44 durchsetzt, der in einer nutartigen Vertiefung des Durchgangskanals 7, 7' gehalten ist. Der Dichtring 44 ist dem Ringelement 34 insbesondere mit Abstand koaxial nachgeordnet. Jedem Ringelement 34 ist ein derartiger Dichtring 44 zugeordnet. Der Dichtring 44 umschließt die eingesteckte Leitung 12 gemäß der Darstellung im unteren Abschnitt der Fig. 2, wobei der Dichtkontakt verhindert, daß Druckmittel an der Leitung 12 vorbei nach außen strömen kann.

Die beispielsgemäßen Klemmarme 42 verfügen über nach außen ragende Radialvorsprünge 45, die in eine nutartige Erweiterung 46 des zugeordneten Durchgangskanals 7, 7' hineinragen. Wird auf die eingesteckte Leitung 12 ein Zug ausgeübt, verlagert sich das Ringelement 34 auf Grund des Klemmkontaktes zwischen den Klemmarmen 42 und der Leitung 12 in Richtung nach axial außen, wodurch die Radialvorsprünge 45 gegen die axial äußere Wandung der nutartigen Erweiterung 46 gedrückt werden. Dies führt zu einer Verstärkung der Klemmkraft, weil die Klemmarme 42 verstärkt nach innen gebogen werden. Der gleiche Effekt tritt auf, wenn die Leitung 12 auf Grund der herrschenden Druckverhältnisse in die entsprechende Richtung beaufschlagt wird.

Um diese Klemmwirkung zu gewährleisten, ist das Ringelement 34 mit gewissem Axialspiel axial beweglich in der zugeordneten Öffnung 5, 5'; 6, 6' gelagert. Das Zusammenwirken zwischen den Radialvorsprüngen 45 und der nutartigen Erweiterung 46 sorgt dabei für eine verliersichere Fixierung des Ringelementes 34 in der zugeordneten Öffnung.

Um eine eingesteckte Leitung 12 entnehmen zu können, werden die Klemmarme 42 derart beaufschlagt, daß sie von der betreffenden Leitung 12 radial abheben. Beim Ausführungsbeispiel geschieht dies durch eine manuelle Druckbeaufschlagung des Löseringes 36 axial nach innen gerichtet. Diese Beaufschlagung führt zu einer Verlagerung des Ringelementes 34 in die entsprechende Richtung, wobei die Radialvorsprünge 45 gegen die axial innenliegende Wandung der nutartigen Erweiterung 46 gedrückt werden und dadurch eine Schwenkbewegung ausführen, bei der sie sich radial von der Leitung 12 entfernen.

Die Steckverbindungseinrichtungen 8 können hinsichtlich ihres Aufbaues insbesondere den Steckverbindungseinrichtungen entsprechen, die in der DE 40 39 066 C1 oder in der DE 40 07 101 C2 beschrieben sind. Auf den Inhalt dieser Patentschriften wird daher besonders verwiesen.

Bei einer anderen Ausgestaltung der Steckverbindungseinrichtung 8, die ebenfalls eine optimale Funktionsweise verspricht, deren Aufbau jedoch etwas komplizierter ist, sind der Lösering 36 und die Spannzange 35 von separaten Bauteilen gebildet (nicht dargestellt). Die Spannzange 35 kann dort beispielsweise ein federelastischer Metallring sein, der einen mäanderförmigen Verlauf hat und dadurch über Klemmarme verfügt, die radial nach innen ragen. Um die Klemmarme 42 hier in die Lösestellung zu verbringen, wird der Lösering 36 manuell verlagert, so daß er unmittelbar auf die Klemmarme einwirkt und diese von der betreffenden Leitung hochhebt.

Das Kupplungsgehäuse 2 der Steckkupplung gemäß Fig. 1 und 2 ist einfach quergeteilt und setzt sich aus zwei in Längsrichtung aufeinanderfolgend angeordneten und aneinander befestigten Gehäuseteilen 47, 48 zusammen. Beim Ausführungsbeispiel liegt eine unlösbare Verbindung vor, indem an dem einen Gehäuseteil 48 ein dünnwandiger umlaufender Kragen 49 angeformt ist, der den angrenzenden Abschnitt des anderen Gehäuseteils 47 außen umschließt und an seinem Randbereich derart umgelegt ist, daß er eine ringförmige Gehäusepartie 50 des anderen Gehäuseteils 47 hintergreift. Der freie Randbereich kann in eine Nut des anderen Gehäuseteils 47 eingerollt sein. Jeder Durchgangskanal 7, 7' wird im Verbindungsbereich der beiden Gehäuseteile 47, 48 von einem Dichtring umschlossen, wobei die beiden Dichtringe beim Ausführungsbeispiel zu einer einstückigen Dichtung 51 zusammengefaßt sind, die einen Fluidaustritt aus beiden Durchgangskanälen 7, 7' verhindert.

Es versteht sich, daß je nach gewünschter Strömungsrichtung des Druckmittels die Absperreinrichtungen 13, 13' auch um 180° gedreht eingebaut sein können. Ferner wäre es durchaus möglich, jeder Öffnung 5, 5'; 6, 6' eine eigene Absperreinrichtung 13, 13' zuzuordnen.

Eine weitere Bauform der erfindungsgemäßen Steckkupplung 1 ist in Fig. 3 dargestellt. Ihr Aufbau entspricht grundsätzlich demjenigen der Steckkupplung gemäß Fig. 1 und 2, so daß auf die Details nicht näher eingegangen werden muß. Der wesentliche Unterschied zu der Steckkupplung gemäß Fig. 1 und 2 liegt darin, daß die beiden Durchgangskanäle 7, 7' vor dem Erreichen der Rückseite 4 zusammengefaßt sind und über einen gemeinsamen Kanalabschnitt 52 in lediglich eine Eingangsöffnung 5 auslaufen. Das über die Eingangsöffnung 5 zugeführte Druckmittel wird also im Innern des Kupplungsgehäuses 2 auf die beiden Ausgangsöffnungen 6, 6' aufgeteilt. Weiterhin ist jedoch auch hier zweckmäßigerweise in jedem Durchgangskanal 7, 7' vor dem Erreichen des gemeinsamen Kanalabschnittes 52 eine Absperreinrichtung 13, 13' angeordnet, die nach Art eines Rückschlagventils aufgebaut ist und mechanisch durch die ausgangsseitig eingesteckte Leitung 12 entsperrt wird.

Wird bei den geschilderten Steckkupplungen eine Leitung aus der zugeordneten Ausgangsöffnung 6, 6' herausgezogen, bewegt sich das Absperrorgan 14 der zugeordneten Absperreinrichtung 13, 13' insbesondere auf Grund der Federbeaufschlagung selbsttätig in die Schließstellung zurück, so daß ein Druckmittel austritt verhindert ist.

## Patentansprüche

1. Anordnung enthaltend eine Steckkupplung und daran anschließbare, einen Fluidkanal enthaltende Leitungen (12) wie Rohre oder Schläuche, wobei die Steckkupplung (12) über ein Kupplungsgehäuse (2) verfügt, das mindestens eine Eingangsöffnung (5, 5') und zwei Ausgangsöffnungen (6, 6') aufweist, die an zwei einander entgegengesetzten Gehäuseseiten angeordnet sind, wobei sowohl der mindestens einen Eingangsöffnung (5, 5') als auch den Ausgangsöffnungen (6, 6') eine am Kupplungsgehäuse (2) angeordnete Verbindungseinrichtung zum lösbaren Anschließen einer der Leitungen (12) zugeordnet ist, und wobei jede Ausgangsöffnung (6, 6') über einen in dem Kupplungsgehäuse (2) ausgebildeten Durchgangskanal (7, 7') mit einer Eingangsöffnung (5, 5') in Verbindung steht und jeder Ausgangsöffnung (6, 6') eine eigene, im zugeordneten Durchgangskanal (7, 7') vorgesehene Absperreinrichtung (13, 13') zugeordnet ist, die ein in eine Schließstellung vorgespanntes und durch mechanische Beaufschlagung in eine Offenstellung bewegbares Absperrorgan (14) aufweist, dadurch gekennzeichnet, daß die Verbindungseinrichtung sowohl einer jeweiligen Eingangsöffnung (5, 5') als auch einer jeweiligen Ausgangsöffnung (6, 6') als Steckverbindungseinrichtung (8) ausgebildet ist, die eine ringförmige Spannzange (35) mit radial beweglichen Klemmarmen (42) aufweist, die so ausgebildet sind, daß sie die eingesteckte Leitung (12) am Außenumfang federelastisch nachgiebig beaufschlagen, und daß die Absperrorgane (14) derart im zugeordneten Durchgangskanal (7, 7') angeordnet sind, daß sie von der Stirnfläche der in die Steckverbindungseinrichtung (8) der zugeordneten Ausgangsöffnung (6, 6') eingesteckten Leitung (12) beaufschlagt und dadurch aus der bei unbelegter Ausgangsöffnung (6, 6') entnommenen Schließstellung in die Offenstellung verlagert sind.

2. Anordnung nach Anspruch 1, dadurch gekennzeichnet, daß an dem Kupplungsgehäuse (2) zwei Ausgangsöffnungen (6, 6') und eine Eingangsöffnung (5) vorgesehen sind, denen jeweils eine Steckverbindungseinrichtung (8) für Leitungen (12) zugeordnet ist, wobei beide Durchgangskanäle (7, 7') mit der einzigen Eingangsöffnung (5) kommunizieren.

3. Anordnung nach Anspruch 2, dadurch gekennzeichnet, daß die beiden Durchgangskanäle (7, 7') im Anschluß an die Eingangsöffnung (5) über einen gemeinsamen Kanalabschnitt (52) verfügen.

4. Anordnung nach Anspruch 1, dadurch gekennzeichnet, daß an dem Kupplungsgehäuse (2) an der einen Gehäusseite (3) zwei Ausgangsöffnungen (6, 6') und an der anderen entgegengesetzten Gehäuseseite (4) zwei Eingangsöffnungen (5, 5') vorgesehen sind, denen jeweils eine Steckverbindungseinrichtung (8) für Leitungen (12) zugeordnet ist, wobei zwei voneinander getrennte Durchgangskanäle (7, 7') vorhanden sind, die jeweils eine der Ausgangsöffnungen (6, 6') mit einer der Eingangsöffnungen (5, 5') verbinden.

5. Anordnung nach einem der Ansprüche 1 bis 4, dadurch gekennzeichnet, daß jede Absperreinrichtung (13, 13') ein federbelastetes Absperrorgan (14) aufweist, das in der Schließstellung an einer gehäuseseitigen Dichtfläche (16) anliegt und in der Offenstellung durch mechanische Einwirkung der Stirnseite (22) der eingesteckten Leitung (12) von der Dichtfläche (16) abgehoben ist.

6. Anordnung nach einem der Ansprüche 1 bis 5, dadurch gekennzeichnet, daß das Kupplungsgehäuse (2) blockähnlich gestaltet ist, wobei die beiden mit Steckverbindungseinrichtungen (8) ausgestatteten Gehäuseseiten von der Vorderseite (3) und der Rückseite (4) des Kupplungsgehäuses (2) gebildet sind.

7. Anordnung nach einem der Ansprüche 1 bis 6, dadurch gekennzeichnet, daß das Kupplungsgehäuse (2) zwei aneinander befestigte Gehäuseteile (47, 48) umfaßt, wobei am einen Gehäuseteil (47) die Ausgangsöffnungen (6, 6') und am anderen Gehäuseteil (48) die vorhandene mindestens eine Eingangsöffnung (5, 5') vorgesehen sind.

8. Anordnung nach einem der Ansprüche 1 bis 7, dadurch gekennzeichnet, daß das Kupplungsgehäuse (2) mindestens eine durchgehende Queröffnung (32) aufweist, die zu Befestigungszwecken dient.

9. Anordnung nach einem der Ansprüche 1 bis 8, dadurch gekennzeichnet, daß jede Steckverbindungseinrichtung (8) einen aus der zugeordneten Öffnung (5, 5'; 6, 6') herausragenden, axial beweglichen Lösering (36) aufweist, über den die Klemmarme (42) derart beaufschlagbar sind, daß sie von der eingesteckten Leitung (12) abheben.

10. Anordnung nach Anspruch 9, dadurch gekennzeichnet, daß die Spannzange (35) und der Lösering (36) insbesondere einstückig fest miteinander verbunden sind.

## Claims

1. Assembly containing a plug coupler and lines (12) such as tubes or hoses containing a fluid passage and connectable to the plug coupler, wherein the plug coupler (12) has a coupler housing (2) with at least one inlet aperture (5, 5') and two outlet apertures (6, 6') arranged on two opposing sides of the housing, wherein both the one or more inlet apertures (5, 5') and the outlet apertures (6, 6') are assigned a coupling device located on the coupler housing (2) for the releasable connection of one of the lines (12), and wherein each outlet aperture (6, 6') is connected to an inlet aperture (5, 5') via a through passage (7, 7') formed in the coupler housing (2), and each outlet aperture (6, 6') is assigned a separate shut-off device (13, 13'), provided in the assigned through passage (7, 7'), which has a shut-off element (14) prestressed in a closed position and movable by mechanical pressure into an open position, characterized in that the coupling device both of any respective inlet aperture (5, 5') and of any respective outlet aperture (6, 6') is in the form of a plug coupling device (8) which has an annular holding clamp (35) with radially movable clamping arms (42) which are so designed that they act upon the outer periphery of the inserted line (12) with sprung flexibility, and that the shut-off elements (14) are arranged in the assigned through passage (7, 7') in such a way that they are pressure-loaded by the end face of the line (12) inserted in the plug coupling device (8) of the assigned outlet aperture (6, 6') and thereby shifted into the open position from the closed position adopted with an unoccupied outlet aperture (6, 6').

2. Assembly according to claim 1, characterized in that the coupler housing (2) is provided with two outlet apertures (6, 6') and one inlet aperture (5), to each of which is assigned a plug coupling device (8) for lines (12), while both through passages (7, 7') communicate with the single inlet aperture (5).

3. Assembly according to claim 2, characterized in that the two through passages (7, 7') have a common passage section (52) adjoining the inlet aperture (5).

4. Assembly according to claim 1, characterized in that the coupler housing (2) is provided on one housing side (3) with two outlet apertures (6, 6') and on the other opposite housing side (4) with two inlet apertures (5, 5'), to each of which is assigned a plug coupling device (8) for lines (12), while there are two through passages (7, 7') separate from one another, each connecting one of the outlet apertures (6, 6') with one of the inlet apertures (5, 5').

5. Assembly according to any of claims 1 to 4, characterized in that each shut-off device (13, 13') has a spring-loaded shut-off element (14) which in the closed position is in contact with a housing-side sealing face (16), and in the open position is lifted from the sealing face (16) by the mechanical action of the end face (22) of the inserted line (12).

6. Assembly according to any of claims 1 to 5, characterized in that the coupler housing (2) is designed in the form of a block, wherein the two housing sides equipped with plug coupling devices (8) are formed by the front (3) and the rear (4) of the coupler housing (2).

7. Assembly according to any of claims 1 to 6, characterized in that the coupler housing (2) comprises two housing sections (47, 48) fastened together, wherein the outlet apertures (6, 6') are provided on one housing section (47), and the other housing section (48) carries the one or more inlet apertures (5, 5').

8. Assembly according to any of claims 1 to 7, characterized in that the coupler housing (2) has one or more transverse openings (32) for fastening purposes.

9. Assembly according to any of claims 1 to 8, characterized in that each plug coupling device (8) has an axially movable release ring (36) extending from the assigned opening (5, 5'; 6, 6'), via which the clamping arms (42) are acted upon in such a way that they lift up from the inserted line (12).

10. Assembly according to claim 9, characterized in that the holding clamp (35) and the release ring (36) are permanently joined together, in particular as one unit.

## Revendications

1. Dispositif contenant un accouplement à enfichage et des conduites (12) telles que des tubes ou des tuyaux, raccordables à celui-ci, contenant un canal de fluide, l'accouplement à enfichage (12) disposant d'un boîtier d'accouplement (2), qui présente au moins une ouverture d'entrée (5, 5') et deux ouvertures de sortie (6, 6'), qui sont disposées sur deux côtés opposés l'un à l'autre du boîtier, un dispositif de liaison, disposé sur le boîtier d'accouplement (2) destiné au raccordement détachable de l'une des conduites (12), étant associé à la ou les ouverture(s) d'entrée (5, 5') ainsi qu'aux ouvertures de sortie (6, 6'), et chaque ouverture de sortie (6, 6') communiquant, par un canal de passage (7, 7') formé dans le boîtier d'accouplement (2), avec une ouverture d'entrée (5, 5') et à chaque ouverture de sortie (6, 6') étant associé son propre dispositif d'arrêt (13, 13') prévu dans le canal de passage (7, 7') associé, lequel comporte un organe d'arrêt (14) précontraint dans une position de fermeture et déplaçable par action mécanique dans une position d'ouverture, caractérisé en ce que le dispositif de liaison de chaque ouverture d'entrée (5, 5') ainsi que de chaque ouverture de sortie (6, 6') est formé en tant que dispositif de liaison à enfichage (8), qui comporte une pince de serrage (35) annulaire avec des bras de serrage (42) mobiles radialement, qui sont formés de manière à agir élastiquement et en flexion sur le pourtour extérieur de la conduite (12) emboîtée, et en ce que les organes d'arrêt (14) sont disposés dans le canal de passage (7, 7') associé de manière à être sollicités par la face frontale de la conduite (12) emboîtée dans le dispositif de liaison à enfichage (8) de l'ouverture de sortie (6, 6') associée et de manière qu'ainsi ils soient déplacés de la position de fermeture, prise lorsque l'ouverture de sortie (6, 6') est dégagée, vers la position d'ouverture.

2. Dispositif selon la revendication 1, caractérisé en ce que sur le boîtier d'accouplement (2) sont prévues deux ouvertures de sortie (6, 6') et une ouverture d'entrée (5), à chacune desquelles est associé un dispositif de liaison à enfichage (8) pour des conduites (12), les deux canaux de passage (7, 7') communiquant avec l'ouverture d'entrée (5) unique.

3. Dispositif selon la revendication 2, caractérisé en ce que les deux canaux de passage (7, 7') disposent d'une portion de canal (52) commune, à la suite de l'ouverture d'entrée (5).

4. Dispositif selon la revendication 1, caractérisé en ce que sur une face (3) du boîtier d'accouplement (2) sont prévues deux ouvertures de sortie (6, 6') et sur l'autre face (4) opposée du boîtier, deux ouvertures d'entrée (5, 5'), à chacune desquelles est associé un dispositif de liaison à enfichage (8) pour des conduites (12), deux canaux de passage (7, 7') séparés l'un de l'autre étant prévus, qui relient chacun l'une des ouvertures de sortie (6, 6') à l'une des ouvertures d'entrée (5, 5').

5. Dispositif selon l'une des revendications 1 à 4, caractérisé en ce que chaque dispositif d'arrêt (13, 13') comporte un organe d'arrêt (14) soumis à l'action d'un ressort, qui en position de fermeture s'applique contre une surface d'étanchéité (16) côté boîtier, et qui en position d'ouverture, est soulevé de la surface d'étanchéité (16) par action mécanique de la face frontale (22) de la conduite (12) emboîtée.

6. Dispositif selon l'une des revendications 1 à 5, caractérisé en ce que le boîtier d'accouplement (2) est réalisé à la manière d'un bloc, les deux faces du boîtier équipées de dispositifs de liaison à enfichage (8) étant formées par la face avant (3) et la face arrière (4) du boîtier d'accouplement (2).

7. Dispositif selon l'une des revendications 1 à 6, caractérisé en ce que le boîtier d'accouplement (2) comprend deux parties de boîtier (47, 48) fixées l'une à l'autre, sur une partie de boîtier (47) étant prévues les ouvertures de sortie (6, 6') et sur l'autre partie de boîtier (48), la ou les ouverture(s) d'entrée (5, 5') existante(s).

8. Dispositif selon l'une des revendications 1 à 7, caractérisé en ce que le boîtier d'accouplement (2) présente au moins une ouverture transversale (32) traversante, qui sert à sa fixation.

9. Dispositif selon l'une des revendications 1 à 8, caractérisé en ce que chaque dispositif de liaison à enfichage (8) comporte une bague de déverrouillage (36) axialement mobile, ressortant de l'ouverture (5, 5'; 6, 6') associée, par laquelle les bras de serrage (42) peuvent être actionnés de manière à se soulever de la conduite (12) emboîtée.

10. Dispositif selon la revendication 9, caractérisé en ce que la pince de serrage (35) et la bague de déverrouillage (36) sont fixement assemblées entre elles, en particulier réalisées d'une seule pièce.
